# FASCICULE DE BREVET EUROPEEN

(11) **EP 4 564 538 B1**
(45) Date de publication et mention de la délivrance du brevet: **04.03.2026**
(21) Numéro de dépôt: 24214428.5
(22) Date de dépôt: 21.11.2024
(51) Int. Cl.: H01M 10/659, H01M 50/30

(54) **MODULE DE BATTERIE À AU MOINS UN ACCUMULATEUR COMPRENANT UNE POUDRE MÉTALLIQUE À CHANGEMENT DE PHASE POUR LIMITER LA PROPAGATION D'EMBALLEMENT THERMIQUE ET DE L'AUGMENTATION DE PRESSION AFFÉRENTE**
BATTERIEMODUL MIT MINDESTENS EINEM SPEICHER MIT EINEM PHASENVERÄNDERLICHEN METALLPULVER ZUR BEGRENZUNG DER AUSBREITUNG VON THERMISCHEM DURCHGEHEN UND DER DRUCKERHÖHUNG DAFÜR
BATTERY MODULE WITH AT LEAST ONE BATTERY INCLUDING PHASE CHANGE METAL POWDER TO LIMIT THERMAL RUNAWAY PROPAGATION AND PRESSURE INCREASE THEREFOR

(30) Priorité: 28.11.2023 FR 2313166
(43) Date de publication de la demande: 04.06.2025
(73) Titulaire: Commissariat à l'Energie Atomique et aux Energies Alternatives, 75015 Paris (FR)
(72) Inventeur: VINCENT, Rémi, 38054 GRENOBLE CEDEX 09 (FR); COGNARD, Jérôme, 38054 GRENOBLE CEDEX 09 (FR)
(74) Mandataire: Ipsilon

(56) Documents cités:
- EP-A1- 3 460 870
- DE-A1- 102020 133 231
- US-A1- 2023 231 266

## Description

### Domaine technique

La présente invention concerne le domaine des accumulateurs électrochimiques, et plus particulièrement à des accumulateurs métal-ion.

Plus particulièrement, l'invention a trait à un film multicouches à appliquer contre un busbar dans un module de batterie.

On rappelle ici qu'un busbar est une bande (clinquant) ou barre en matériau électriquement conducteur, éventuellement feuilletée avec un ou des matériaux électriquement isolants, qui est fixée, de préférence vissée ou soudée, à une borne de sortie d'au moins un accumulateur électrochimique pour assurer la connexion électrique avec un autre accumulateur électrochimique d'un pack-batterie ou un autre élément d'entrée/sortie électrique.

L'invention vise principalement à optimiser le refroidissement des accumulateurs d'un pack-batterie tel que l'énergie d'un emballement thermique d'un accumulateur donné au sein du pack ne puisse se propager aux autres accumulateurs.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion... ou de manière plus générale à tout accumulateur électrochimique.

Un pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

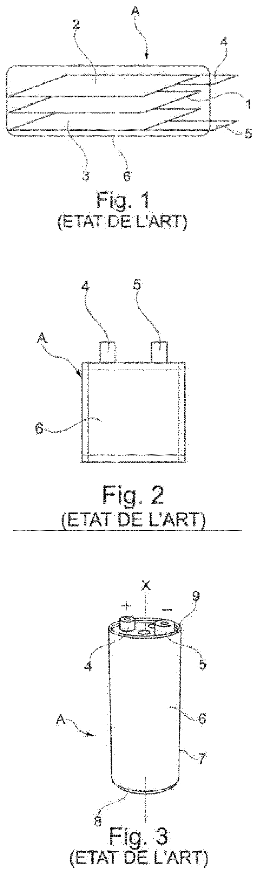

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US2006/0121348,
- une géométrie prismatique telle que divulguée dans les brevets US 7348098, US 7338733;
- une géométrie en empilement telle que divulguée dans les demandes de brevet US2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique ou par empilement de cellules électrochimiques.

La demande de brevet FR3004292 décrit l'utilisation de l'intérieur du mandrin en tant que lame d'air pour refroidir à cœur une cellule enroulée d'un accumulateur métal-ion.

Un des types de boitier rigide de forme cylindrique, usuellement fabriqué pour un accumulateur Li-ion de forte capacité, est illustré en figure 3.

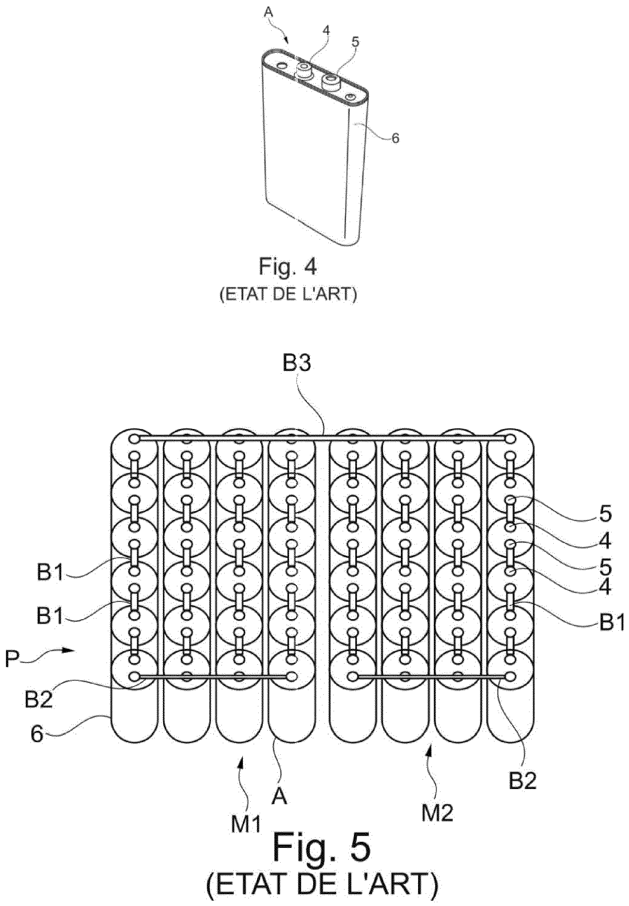

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium-ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule électrochimique augmente jusqu'à destruction, ce phénomène étant désigné usuellement sous l'appellation d'emballement thermique (en anglais *«Thermal Runaway»).*

Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

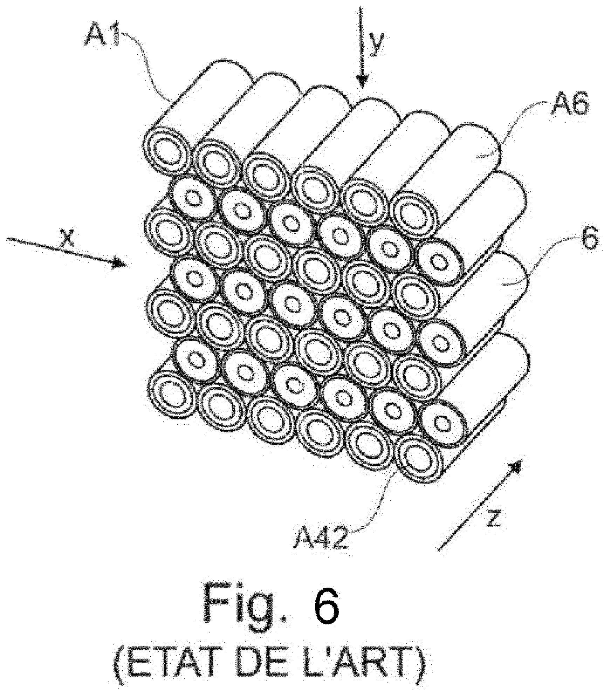

Pour des raisons de compacité volumique, il est choisi d'utiliser des assemblages de X accumulateurs en série et Y en parallèle, une intégration mécanique d'accumulateurs de géométrie cylindrique à boitier rigide 6 au sein d'un module ou d'un pack-batterie largement retenue est celle illustrée à la figure 6.

Dans cette intégration, les accumulateurs A1, A2...A42 sont agencés parallèles les uns en contact avec les autres par leur boiter 6 et en quinconce en formant une matrice qui s'étend selon la direction Z. Un agencement en quinconce permet une grande densité énergétique.

L'assemblage de cette matrice se fait le plus souvent par collage des accumulateurs A1, A2... A42 les uns aux autres.

Dans le cadre d'une étude d'analyse de risque de fonctionnement, les inventeurs ont mis en évidence qu'un des risques les plus critiques pour un module tel que celui de la figure 6, était le court-circuit interne d'un accumulateur, suite à un défaut de fabrication (avec un taux de défaillance de 10⁻⁷/h).

Ainsi, lors de la déclaration d'un défaut de ce type, comme déjà évoqué ci-avant, un emballement thermique d'un accumulateur au sein du module peut se produire. Suite à cet emballement d'un accumulateur individuel, celui-ci peut se propager aux accumulateurs adjacents au sein d'un module.

Il est donc important de mettre en œuvre une solution de mitigation qui supprime le risque de propagation lors de l'emballement fortuit d'un accumulateur, et aussi limite les éventuelles propagations à l'extérieur du module, en particulier par l'expulsion de flamme ou particules incandescentes.

Or, tous les dispositifs de refroidissement existants selon l'art antérieur, ne permettent pas de mitiger réellement un emballement thermique d'un accumulateur au sein d'un pack-batterie, c'est-à-dire qui permettent d'atténuer la transmission de l'énergie dissipée par un emballement thermique de l'accumulateur aux autres accumulateurs du pack, afin d'éviter qu'eux-mêmes ne rentrent dans une situation d'emballement thermique.

La demande de brevet WO2022/090575 A1 a proposé un film multicouches, agencé sur le trajet préalablement déterminé des gaz chauds libérés sous pression en cas d'emballement thermique d'un des accumulateurs d'un module de batterie, dont la couche de gel aqueux en regard des accumulateurs permet de limiter la propagation d'un emballement thermique d'un de ceux-ci aux autres. Cette solution de film multicouches dont une couche de gel aqueux est satisfaisante dans la mesure où elle refroidit efficacement les gaz chauds et qu'en outre elle est optimisée en termes de poids et d'encombrement pour préserver les performances du pack. Elle présente néanmoins l'inconvénient de pouvoir, dans certaines configurations, contribuer à l'élévation de pression par son changement de phase dans le boitier du module.

Le document DE 10 2020 133231 A1 décrit une poudre métallique à changement de phase, mise dans au moins une zone destinée au passage des gaz chauds libérés par un des accumulateurs lors d'un emballement thermique, la poudre étant adaptée pour changer de phase dans la zone et ainsi limiter la convection thermique des gaz chauds libérés.

Il existe donc un besoin pour améliorer les solutions de mitigation d'emballement thermique de n'importe quel accumulateur au sein d'un module ou d'un pack-batterie, qui n'augmente pas la pression.

En outre, l'amélioration doit aussi être optimisée en termes de poids et d'encombrement pour préserver les performances du module ou du pack-batterie.

Le but de l'invention est de répondre au moins en partie à ce(s) besoin(s).

### Exposé de l'invention

Pour ce faire, l'invention concerne, sous l'un de ses aspects, un module de batterie comprenant:
- une pluralité d'accumulateurs comprenant chacun au moins une cellule électrochimique formée d'une cathode, d'une anode et d'un électrolyte intercalé entre la cathode et l'anode, un boitier agencé pour contenir avec étanchéité la cellule électrochimique et deux bornes de sortie faisant saillie du couvercle et/ou du fond du boitier;
- de préférence au moins un busbar fixé à une des bornes de sortie d'au moins une partie des accumulateurs, afin de les relier électriquement entre eux ;
- au moins une poudre métallique à changement de phase, mise dans au moins une zone destinée au passage des gaz chauds libérés par un des accumulateurs lors d'un emballement thermique, la poudre étant adaptée pour changer de phase dans la zone et ainsi limiter la convection thermique des gaz chauds libérés.

De préférence au moins une partie de la poudre étant déposée sur le busbar.

Selon l'invention, le matériau de la poudre métallique à changement de phase étant adapté pour changer de phase à une température comprise entre 150 et 700° C, de préférence entre 250 et 500° C.

Selon l'invention, le matériau de la poudre métallique à changement de phase étant choisi parmi le fluoroborate de potassium (KBF4), chlorure de magnésium et de potassium (KMgCl3), NaKMgCl, KMgZnCl ou un mélange de ceux-ci.

Les accumulateurs peuvent être de géométrie cylindrique.

Selon un mode de réalisation avantageux, le module comprend au moins un moyen d'étanchéité entre les accumulateurs et la zone destinée au passage des gaz chauds libérés par un des accumulateurs lors d'un emballement thermique.

Selon ce mode et une configuration avantageuse, le module comprend un boitier dit boitier de batterie logeant les accumulateurs cylindriques et une plaque de maintien étanche, en tant que moyen d'étanchéité, qui maintient les accumulateurs cylindriques dans le boitier de batterie et l'étanchéité entre une de leurs bornes, notamment leurs bornes positives, connectées électriquement en série et/ou en parallèle et le reste des accumulateurs cylindriques, la poudre remplissant au moins en partie le volume délimité entre le boitier de batterie et la plaque de maintien étanche qui contient les bornes connectées.

Les grains de la poudre peuvent être libres ou agglomérés.

Selon une variante avantageuse, la poudre est, préalablement à sa mise en place, compactée sous pression ou agglomérée par un liant en polymère, de préférence choisi parmi la carboxyméthylcellulose (CMC) ou l'acétate de polyvinyle (PVAC).

Avantageusement, l'épaisseur de la poudre métallique déposée est comprise entre 10 et 50mm.

Selon une variante de réalisation avantageuse, la poudre métallique est encapsulée entre deux films d'encapsulation ou dans une enveloppe d'encapsulation fermée par un film. Ces enveloppe et films d'encapsulation permettent d'éviter l'écoulement de la poudre avec le temps ou les vibrations que peut subir le module de batterie.

De préférence, un des deux films d'encapsulation est destinée à être appliqué directement contre le busbar.

Afin de permettre une bonne évacuation des gaz, un film d'encapsulation est configuré pour se détériorer au moment de l'ouverture d'un évent d'accumulateur et de l'éjection éventuelle de l'électrolyte. Ainsi, avantageusement, l'un et/ou l'autre des films d'encapsulation est(sont) en un polymère choisi parmi le polyéthylène (PE) ou le polyéther.

L'épaisseur de chaque film d'encapsulation est de préférence au plus égale à 50µm.

Ainsi, l'invention consiste essentiellement en une poudre métallique à changement de phase, agencée sur le trajet préalablement déterminé des gaz chauds libérés sous pression en cas d'emballement thermique d'un des accumulateurs d'un module de batterie.

La poudre en regard des accumulateurs va limiter par son changement de phase l'effet de convection thermique lorsque les gaz incandescents sont libérés d'un accumulateur et par conduction thermique notamment par un busbar et ainsi éviter la propagation d'un emballement thermique d'un de ceux-ci aux autres.

Ainsi, lors de l'emballement thermique d'un des accumulateurs, que l'on peut désigner par « accumulateur gâchette », la fusion de la poudre localement va permettre de fortement limiter l'augmentation de la température des accumulateurs voisins.

La fonction première de la poudre est de former une véritable barrière de protection thermique des autres accumulateurs, i.e. ceux qui ne sont pas en emballement, en empêchant les gaz chauds libérés par le ou les évents de sécurité de l'accumulateur gâchette de venir réchauffer très fortement les autres accumulateurs.

La ou les zones de passage des gaz chauds libérés lors d'un emballement thermique d'un des accumulateurs du module (M), est(sont) préalablement déterminée(s).

Lors d'un emballement thermique, la poudre peut permettre, avantageusement, de séparer les gaz chauds dégazer hors de l'accumulateur gâchette du reste des accumulateurs en formant une barrière thermique limitant les échanges thermiques entre les gaz d'évent ayant traversés la poudre et les accumulateurs.

Les gaz chauds peuvent traverser la poudre qui change alors de phase.

Au moins un des accumulateurs, de préférence chaque accumulateur, peut comprendre au moins un évent de sécurité configuré pour libérer les gaz chauds sous pression lors d'un emballement thermique dudit accumulateur, la poudre étant mise en regard de l'évent de sécurité. Avantageusement, un tel agencement permet d'augmenter la quantité de gaz chauds pouvant traverser la poudre lors de leur dégazage. Avantageusement, la poudre est agencée au plus près de l'évent de sécurité, voire déposée sur ce dernier.

De préférence, le(s) évent(s) de sécurité est(sont) situé(s) sur une des bornes de sortie de l'(des) accumulateur(s), de préférence sur la borne de sortie positive. Le dégazage des gaz chauds peut avoir lieu à travers le busbar.

On précise ici que pour le phénomène d'emballement thermique, on se reportera à la publication [2] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Autrement dit, grâce à la poudre à changement de phase conforme à l'invention, l'énergie de l'emballement thermique de l'accumulateur gâchette n'est pas intégralement transmise aux accumulateurs adjacents du pack, limitant ainsi leur température.

Par conséquent, une poudre selon l'invention permet d'éviter que les accumulateurs voisins d'un accumulateur gâchette, partent eux aussi en emballement thermique.

Par comparaison avec une solution connue utilisant de l'eau liquide, la mise en œuvre d'une poudre à changement de phase selon l'invention est plus simple. En effet, elle ne nécessite pas d'avoir un contenant parfaitement étanche tout au long de l'emballement d'un accumulateur. La poudre permet également de limiter les potentiels risques de court-circuit au sein d'un module de batterie.

De manière plus générale, la poudre à changement de phase selon l'invention se distingue des solutions selon l'état de l'art par une action à plus haute température que les matériaux généralement employés, du fait de son changement de phase et qu'elle ne produit pas de gaz supplémentaire. L'augmentation de volume lié au changement de phase de la poudre entre solide et liquide est bien inférieure à un changement de phase vers une phase gazeuse. La poudre limite donc la pression maximale au sein d'un boitier de module, ce qui n'est pas le cas des solutions selon l'état de l'art, comme l'eau.

Les inventeurs ont vaincu un préjugé technique car jusqu'à présent, il était admis que seuls des matériaux à changement de phase à environ 100°C permettaient d'éviter l'emballement d'un accumulateur gâchette.

Mais en analysant les types d'emballement thermique, les inventeurs ont mis en exergue que de tels matériaux ne sont pas réellement efficaces pour les défauts de court-circuit interne à un accumulateur.

C'est pourquoi, les inventeurs ont fait le choix d'une poudre dont le changement de phase s'établit à plus haute température pour privilégier la limitation de propagation et la quantité de gaz libérés dans un boitier de module de batterie.

Au final, l'invention apporte de nombreux avantages parmi lesquels on peut citer :
- la mise en œuvre d'une poudre est plus simple que les solutions de l'état de l'art car elle ne demande pas de solutions parfaitement étanches tout au long de l'emballement d'un accumulateurs ;
- la limitation des potentiels risques de court-circuit ;
- une solution de sécurité simple à mettre en œuvre et efficace pour empêcher la propagation d'un emballement thermique au sein d'un module ou d'un pack-batterie ;
- une solution qui n'est pas au détriment du poids d'un module ou d'un pack-batterie, une poudre à changement de phase selon l'invention pouvant être très légère, ce qui est très avantageux pour les applications embarquées ;
- la possibilité de mettre en place une poudre à changement de phase très rapidement et aisément dans un module ou un pack-batterie, dès sa conception ou au contraire en rétrofit d'un module ou pack-batterie existant.

Pour une application à un pack-batterie Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en en perspective d'un accumulateur lithium-ion selon l'état de l'art avec son emballage rigide constitué d'un boitier de forme prismatique.
[Fig 5] la figure 5 est une vue en perspective d'un assemblage au moyen de busbars d'accumulateurs lithium-ion selon l'état de l'art, formant un pack-batterie.
[Fig 6] la figure 6 est une vue en perspective d'une pluralité d'accumulateurs lithium-ion de géométrie cylindrique préassemblés entre eux selon l'état de l'art, formant une matrice destinée à un module de batterie ou un pack-batterie.
[Fig 7] la figure 7 est une vue de côté d'un module de batterie équipé avec un busbar sur lequel est déposée une poudre métallique à changement de phase selon l'invention.

### Description détaillée

Les figures 1 à 6 sont relatives à des exemples différents d'accumulateur Li-ion, d'emballages souples et boitiers d'accumulateurs ainsi qu'un pack-batterie selon l'état de l'art. Ces figures 1 à 6 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 7.

Dans l'ensemble de la présente demande, les termes « inférieur », « supérieur », « bas », « haut », « dessous » et « dessus » sont à comprendre par référence par rapport à des boitiers d'accumulateurs Li-ion agencés à la verticale, c'est-à-dire avec un film multicouches selon l'invention à l'horizontal.

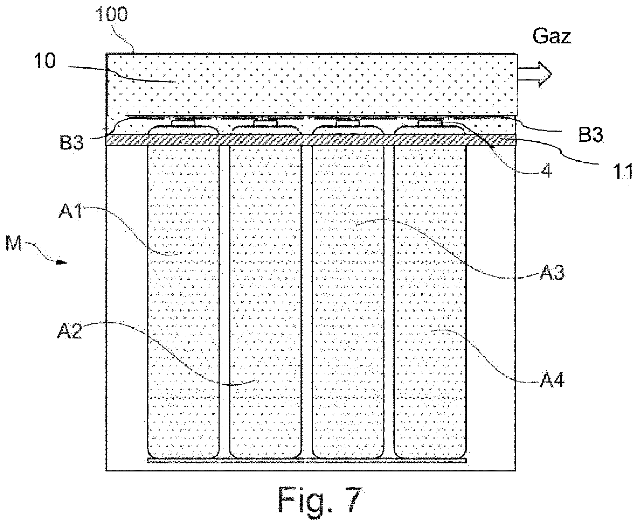

On a représenté en figure 7, un exemple de poudre métallique à changement de phase 10 selon l'invention déposé sur un busbar B3 d'un module M de batterie d'accumulateurs Li-ion, A1, A2, A3, A4.

Dans les exemples illustrés, les accumulateurs A1-A4 illustrés peuvent être à boitiers de format cylindrique, typiquement de format 18650 ou 21700.

Les accumulateurs A1-AA4 sont reliés électriquement par leur borne de sortie par groupe par le busbar B3.

Selon une variante de l'invention, une poudre métallique à changement de phase 10 selon l'invention est déposée directement contre le busbar B3.

La poudre 10 est de préférence en KBF4.

La poudre 10 peut être encapsulée entre deux films en polymère.

L'épaisseur de chaque film d'encapsulation est typiquement d'environ 50µm.

L'épaisseur de la poudre 10 peut être comprise entre 10 et 50mm.

En ce qui concerne la mise en place d'une poudre10 selon l'invention au sein d'un module de batterie M, elle peut être réalisée sous plusieurs formes.

Une première alternative consiste à déverser la poudre 10 par écoulement gravitaire pour qu'elle se dépose au moins sur le busbar B3 des bornes positives 4.

La poudre déversée peut remplir au moins partiellement un volume compris entre la paroi du boitier 100 du module et une plaque de maintien et d'étanchéité 11, agencés en dessous du busbar B3 et des bornes positives 4, comme montré à la figure 7.

Cette plaque 11 maintient les accumulateurs A1 à A4 et sépare de manière étanche les bornes de sortie 4 du reste des accumulateurs.

Une deuxième alternative consiste à encapsuler la poudre 10 entre deux films d'encapsulation, comme indiqué ci-avant et à mettre en place l'ensemble encapsulé directement en contact avec le busbar B3.

Une troisième alternative consiste à agglomérer la poudre 10 pour en faire une pièce solide, notamment par une compaction sous pression ou par un mélange préalable avec un liant polymère, du type CMC ou PVAC, puis à positionner la pièce solide réalisée directement en contact avec le busbar B3.

Pendant l'emballement thermique d'un accumulateur de format 18650, environ 80 kJ d'énergie thermique peut être libérée.

Généralement, l'énergie libérée est partagée entre les gaz et les matériaux en fusion éjectés qui représentent environ 70% de la chaleur, et l'énergie émise par le boitier de l'accumulateur du fait des matériaux retenus dans la réalisation de l'accumulateur, qui représente les 30% de chaleur restante.

Il est donc important de mettre en œuvre une solution de mitigation du transfert de chaleur entre les accumulateurs prenant en considération la convection thermique via les gaz ainsi que la conduction par les busbars.

Comme schématisé en figure 7, l'ajout d'une poudre 10 à changement de phase sur un busbar B3, typiquement relié aux bornes positives 4 d'accumulateurs A1-A4 permet la limitation de ces deux modes de transfert de chaleur. Les gaz chauds de l'accumulateur gâchette sont évacués par son évent de sécurité.

L'évent de sécurité des accumulateurs peut être situé sur leur borne positive 4. Les gaz chauds évacués par l'évent de sécurité passent alors au travers du busbar B3 puis traversent la poudre métallique à changement de phase 10.

La poudre 10 limite alors la conduction par le busbar B3 ainsi que l'effet de convection thermique des gaz chauds sur les accumulateurs adjacents à l'accumulateur gâchette.

Afin de valider la sécurité de la poudre KBF4 selon l'invention, les inventeurs ont procédé à des essais.

Chacun des essais à consister à loger des accumulateurs de type 18650 dans un canister simulant un boitier de module de batterie puis à faire partir en emballement thermique ces accumulateurs.

Dans un essai, à titre comparatif, aucune poudre n'a été mise dans le canister. Dans l'autre essai, une quantité de poudre de KBF4 a été mise, conformément à l'invention.

Visuellement, les inventeurs ont constaté que de grandes flammes incandescentes sortaient du canister de l'essai comparatif alors qu'aucune flamme ne sortait de lui contenant la poudre KBF4.

Cet aspect, i.e. qu'aucune flamme ne sorte d'un boitier de module, en cas d'emballement thermique est très important, notamment car les nouvelles normes automobiles vont amener des contraintes supplémentaires sur la présence de flamme hors d'un boitier des pack-batteries.

En outre, dans chacun des deux essais la pression et la température ont également été mesurées à l'intérieur du canister. Le tableau 1 résume les mesures effectuées.

**[Tableau 1]**

| Essai | Essai sans poudre KBF4 | Essai selon l'invention, avec poudre KBF4 |
|---|---|---|
| Température (°C) | 1300 | 600 |
| Pression (bar) | 7,5 | 3,2 |

Les résultats montrent clairement que l'ajout d'une poudre de KBF4 diminue la température ainsi que la pression maximale dans le canister.

Ces résultats sont particulièrement importants car la température maximale a un impact direct sur le risque de propagation de l'emballement thermique et la pression est une valeur directement utilisée pour le dimensionnement mécanique d'un boitier de module ou de pack-batterie.

Ainsi, la diminution de la pression maximale avec l'ajout d'une poudre de KBF4 conduit à envisager une optimisation de masse: l'ajout d'une faible masse de poudre de KBF4 peut conduire à la suppression d'une masse relativement importante d'un boitier de module.

D'autres variantes et améliorations peuvent être envisagées sans pour autant sortir du cadre de l'invention.

Les exemples donnés ci-dessus relatifs au pôle positif des accumulateurs sont également transférables à l'application sur un busbar du côté des pôles négatifs.

Dans les modes de réalisation illustrés, les accumulateurs sont cylindriques, par exemple de type 18650, avec un évent de sécurité dans la borne positive de chaque accumulateur. D'autres formes d'accumulateurs et/ou d'autres agencements des évents de sécurité sont envisageables.

Les pressions et températures de sortie des gaz par les évents sont cependant telles que la poudre à changement de phase selon l'invention est choisie pour ne pas représenter une barrière notable à l'évacuation des gaz incandescents depuis les évents des accumulateurs.

### Liste des références citées :

[1] https://www.mersen.com/sites/default/files/publications-media/16-markets-transportation-ev-hev-emobility-presentation-mersen.pdf.
[2] Xuning Fenga, et al. « Key Characteristics for Thermal Runaway of Li-ion Batteries » Energy Procedia, 158 (2019) 4684-4689.

## Revendications

1. Module (M) de batterie comprenant:
- une pluralité d'accumulateurs (A1, A2...A8) comprenant chacun au moins une cellule électrochimique C formée d'une cathode (2), d'une anode (3) et d'un électrolyte intercalé entre la cathode et l'anode, un boitier (6) agencé pour contenir avec étanchéité la cellule électrochimique et deux bornes de sortie (4, 5) faisant saillie du couvercle et/ou du fond du boitier;
- de préférence au moins un busbar (B1, B2, B3) fixé à une des bornes de sortie (4 ou 5) d'au moins une partie des accumulateurs, afin de les relier électriquement entre eux ;
- au moins une poudre métallique (10) à changement de phase, mise dans au moins une zone destinée au passage des gaz chauds libérés par un des accumulateurs lors d'un emballement thermique, la poudre étant adaptée pour changer de phase dans la zone et ainsi limiter la convection thermique des gaz chauds libérés, **caractérisé en ce que**
le matériau de la poudre métallique à changement de phase est adapté pour changer de phase à une température comprise entre 150 et 700° C, de préférence entre 250 et 500° C, et **en ce que** le matériau de la poudre métallique à changement de phase est choisi parmi le fluoroborate de potassium (KBF4), chlorure de magnésium et de potassium (KMgCl3), NaKMgCl, KMgZnCl ou un mélange de ceux-ci.

2. Module (M) de batterie selon la revendication 1, au moins une partie de la poudre étant déposée sur le busbar.

3. Module (M) de batterie selon l'une des revendications précédentes, les accumulateurs étant de géométrie cylindrique.

4. Module (M) de batterie selon l'une des revendications précédentes, comprenant au moins un moyen d'étanchéité entre les accumulateurs et la zone destinée au passage des gaz chauds libérés par un des accumulateurs lors d'un emballement thermique.

5. Module (M) de batterie selon la revendication 4 en combinaison avec la revendication 3, comprenant un boitier dit boitier de batterie logeant les accumulateurs cylindriques et une plaque de maintien étanche, en tant que moyen d'étanchéité, qui maintient les accumulateurs cylindriques dans le boitier de batterie et assure l'étanchéité entre une de leurs bornes, notamment leurs bornes positives, connectées électriquement en série et/ou en parallèle et le reste des accumulateurs, la poudre remplissant au moins en partie le volume délimité entre le boitier de batterie et la plaque de maintien étanche qui contient les bornes connectées.

6. Module (M) de batterie selon l'une des revendications précédentes, les grains de la poudre étant libres ou agglomérés.

7. Module (M) de batterie selon la revendication 6 la poudre étant préalablement à sa mise en place, compactée sous pression ou agglomérée par un liant en polymère, de préférence choisi parmi la carboxyméthylcellulose (CMC) ou l'acétate de polyvinyle (PVAC).

8. Module (M) de batterie selon l'une des revendications précédentes, l'épaisseur de la poudre métallique étant comprise entre 10 et 50 mm.

9. Module (M) de batterie selon l'une des revendications précédentes, la poudre métallique étant encapsulée entre deux films d'encapsulation ou dans une enveloppe d'encapsulation fermée par un film.

10. Module (M) de batterie selon la revendication 9, l'un et/ou l'autre des films d'encapsulation étant en un polymère choisi parmi le polyéthylène (PE) ou le polyéther.

11. Module (M) de batterie selon la revendication 9 ou 10, l'épaisseur d'un film d'encapsulation étant au plus égale à 50µm.

12. Module (M) de batterie selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

## Patentansprüche

1. Batteriemodul (M), umfassend:
- eine Mehrzahl von Akkumulatoren (A1, A2...A8), umfassend jeweils mindestens eine elektrochemische Zelle C, die aus einer Kathode (2), einer Anode (3) und einem zwischen der Kathode und der Anode angeordneten Elektrolyten gebildet wird, ein Gehäuse (6), das dazu ausgebildet ist, die elektrochemische Zelle dicht aufzunehmen, und zwei Ausgangsklemmen (4, 5), die von dem Deckel und/oder dem Boden des Gehäuses abragen;
- vorzugsweise mindestens eine Busbar (B1, B2, B3), die an einer der Ausgangsklemmen (4 oder 5) mindestens eines Teils der Akkumulatoren befestigt ist, um sie elektrisch untereinander zu verbinden;
- mindestens ein metallisches Phasenwechsel-Pulver (10), das in mindestens einen Bereich gegeben wird, der zum Durchführen der heiße Gase bestimmt ist, die von einem der Akkumulatoren bei einem thermischen Durchgehen freigesetzt werden, wobei das Pulver dazu angepasst ist, in dem Bereich die Phase zu wechseln und so die thermische Konvektion der freigesetzten heißen Gase zu begrenzen, **dadurch gekennzeichnet, dass** das Material des metallischen Phasenwechsel-Pulvers dazu angepasst ist, die Phase bei einer Temperatur zwischen 150 und 700 °C, vorzugsweise zwischen 250 und 500 °C, zu wechseln, und dass das Material des metallischen Phasenwechsel-Pulvers aus Kaliumfluoroborat (KBF4), Kalium-Magnesium-Chlorid (KMgCl3), NaKMgCl, KMgZnCl oder einer Mischung davon ausgewählt ist.

2. Batteriemodul (M) nach Anspruch 1, wobei mindestens ein Teil des Pulvers auf die Busbar aufgebracht ist.

3. Batteriemodul (M) nach einem der vorhergehenden Ansprüche, wobei die Akkumulatoren von zylindrischer Geometrie sind.

4. Batteriemodul (M) nach einem der vorhergehenden Ansprüche, umfassend mindestens ein Dichtungsmittel, das zwischen den Akkumulatoren und dem zum Durchführen der bei einem thermischen Durchgehen von einem der Akkumulatoren freigesetzten heißen Gase bestimmten Bereich.

5. Batteriemodul (M) nach Anspruch 4 in Kombination mit Anspruch 3, umfassend ein Batteriegehäuse genanntes Gehäuse, in dem die zylindrischen Akkumulatoren untergebracht sind, und eine dichte Halteplatte als Dichtungsmittel, die die zylindrischen Akkumulatoren in dem Batteriegehäuse hält und die Dichtheit zwischen einer ihrer Klemmen, insbesondere ihren positiven Klemmen, die in Reihe und/oder parallel angeschlossen sind, und dem Rest der Akkumulatoren gewährleistet, wobei das Pulver mindestens teilweise das zwischen dem Batteriegehäuse und der dichten Halteplatte begrenzte Volumen füllt, das die angeschlossenen Klemmen enthält.

6. Batteriemodul (M) nach einem der vorhergehenden Ansprüche, wobei die Körner des Pulvers frei oder agglomeriert sind.

7. Batteriemodul (M) nach Anspruch 6, wobei das Pulver vor seinem Einbringen unter Druck verdichtet wird oder durch ein Polymerbindemittel agglomeriert wird, das vorzugsweise aus Carboxymethylcellulose (CMC) oder Polyvinylacetat (PVAC) ausgewählt ist.

8. Batteriemodul (M) nach einem der vorhergehenden Ansprüche, wobei die Dicke des Metallpulvers zwischen 10 und 50 mm beträgt.

9. Batteriemodul (M) nach einem der vorhergehenden Ansprüche, wobei das Metallpulver zwischen zwei Verkapselungsfolien oder in eine durch einen Film geschlossene Verkapselungshülle gekapselt wird.

10. Batteriemodul (M) nach Anspruch 9, wobei die eine und/oder die andere der Verkapselungsfolien aus einem Polymer ist, das aus Polyethylen (PE) oder Polyether ausgewählt ist.

11. Batteriemodul (M) nach Anspruch 9 oder 10, wobei die Dicke einer Verkapselungsfolie höchstens 50 µm beträgt.

12. Batteriemodul (M) nach einem der vorhergehenden Ansprüche, wobei jeder Akkumulator ein Li-Ionen-Akkumulator ist, wobei:
- das Material der negativen Elektrode(n) aus der Gruppe ausgewählt ist, die Graphit, Lithium, Titanatoxid Li₄TiO₅O₁₂ umfasst;
- das Material der positiven Elektrode(n) aus der Gruppe ausgewählt ist, die LiFePO₄, LiCoO₂, LiNi_{0.33}Mn_{0.33}Co_{0.33}O₂ umfasst.

## Claims

1. Battery module (M) comprising:
- a plurality of accumulators (A1, A2...A8) each comprising at least one electrochemical cell C formed of a cathode (2), an anode (3) and an electrolyte interposed between the cathode and the anode, a casing (6) arranged to contain the electrochemical cell in a leaktight manner and two output terminals (4, 5) projecting from the lid and/or bottom of the casing;
- preferably at least one busbar (B1, B2, B3) attached to one of the output terminals (4 or 5) of at least some of the accumulators, so as to electrically interconnect them;
- at least one phase-change metal powder (10), placed in at least one area intended for the passage of hot gases released by one of the accumulators during thermal runaway, the powder being suitable for changing phase in the area and thus limiting thermal convection of the released hot gases, **characterized in that** the phase-change metal powder material is suitable for phase change at a temperature of between 150 and 700°C, preferably between 250 and 500°C, and **in that** the phase-change metal powder material is chosen from potassium fluoroborate (KBF4), magnesium potassium chloride (KMgCl3), NaKMgCl, KMgZnCl or a mixture thereof.

2. Battery module (M) according to Claim 1, at least some of the powder being deposited on the busbar.

3. Battery module (M) according to either of the preceding claims, the accumulators having a cylindrical geometry.

4. Battery module (M) according to one of the preceding claims, comprising at least one leaktightness means between the accumulators and the area intended for the passage of hot gases released by one of the accumulators during thermal runaway.

5. Battery module (M) according to Claim 4 in combination with Claim 3, comprising a casing, known as a battery casing, housing the cylindrical accumulators and a leaktight retaining plate, as a leaktightness means, which holds the cylindrical accumulators in the battery casing and ensures the leaktightness between one of their terminals, notably their positive terminals, electrically connected in series and/or parallel, and the rest of the accumulators, the powder at least partly filling the volume delimited between the battery casing and the leaktight retaining plate containing the connected terminals.

6. Battery module (M) according to one of the preceding claims, the powder grains being loose or agglomerated.

7. Battery module (M) according to Claim 6, the powder, prior to its insertion, being compacted under pressure or agglomerated with a polymeric binder, preferably chosen from carboxymethylcellulose (CMC) or polyvinyl acetate (PVAC) .

8. Battery module (M) according to one of the preceding claims, the thickness of the metal powder being between 10 and 50 mm.

9. Battery module (M) according to one of the preceding claims, the metal powder being encapsulated between two encapsulation films or in an encapsulation envelope closed by a film.

10. Battery module (M) according to Claim 9, one and/or the other of the encapsulation films being made of a polymer chosen from polyethylene (PE) or polyether.

11. Battery module (M) according to Claim 9 or 10, the thickness of an encapsulation film being not more than 50 µm.

12. Battery module (M) according to one of the preceding claims, each accumulator being an Li-ion accumulator in which:
- the material of negative electrode(s) is chosen from the group including graphite, lithium, titanate oxide Li₄TiO₅O₁₂;
- the material of positive electrode(s) is chosen from the group including LiFePO₄, LiCoO₂ and LiNi_{0.33}Mn_{0.33}Co_{0.33}O₂.
